# EUROPEAN PATENT APPLICATION

(11) **EP 3 561 693 A1**
(43) Date of publication of application: **30.10.2019**
(21) Application number: 17798090.1
(22) Date of filing: 15.02.2017
(51) Int. Cl.: G06F 17/30

(54) **MODIFICATION REMINDER METHOD, DEVICE, AND TERMINAL, AND STORAGE MEDIUM**

(30) Priority: 15.12.2016 CN 201611159211
(71) Applicant: Ping An Technology (Shenzhen) Co., Ltd., Shenzhen, Guangdong 518000 (CN)
(72) Inventor: DING, Jie, Shenzhen Guangdong 518000 (CN); CAI, Ning, Shenzhen Guangdong 518000 (CN); WU, Haibo, Shenzhen Guangdong 518000 (CN); LING, Jian, Shenzhen Guangdong 518000 (CN); JIANG, Yunpeng, Shenzhen Guangdong 518000 (CN)
(74) Representative: dompatent von Kreisler Selting Werner - Partnerschaft von Patent- und Rechtsanwälten mbB
(86) International application number: PCT/CN2017/073544
(87) International publication number: WO 2018/107575

(57) **Abstract**

A method, device, terminal, and storage medium for amending prompt. The method comprises: when an operation that a specified product is amended is detected, obtaining attribute information of a current amendment; inquiring a relevance model according to the specified product and the attribute information, so as to obtain relevant products of the specified product and relevant attribute information of the attribute information; and outputting prompt information, so as to prompt the user whether to amend the relevant products and the relevant attribute information synchronously. In this way, the user can obtain relevant products or attribute information during an amending process of an insurance product, amending operations of the user are effectively facilitated, the amending efficiency is improved, and it is convenient to reduce the probability of missed amendments or mistaken amendments of insurance products.

## Description

### FIELD OF THE INVENTION

The present application relates to the technical field of computers, and relates to a method, device, terminal, and storage medium for amending prompt.

### BACKGROUND OF THE INVENTION

There are more and more kinds of customized insurance of every insurance company, and the probability of error is correspondingly increased. In the prior art, a salesman has to amend each insurance one by one in an insurance system, the ways to amend insurance are complicated, repeated, and independent from each other. The salesman is prone to cause incidents of missed amendments or mistaken amendments, which may then result in definition errors of insurance products, and affect sale of the insurance products.

### SUMMARY OF THE INVENTION

In view of this, embodiments of the present application provide a method, device, terminal, and storage medium for amending prompt, so as to achieve an intelligent prompt of an amending process and reduce the probability of missed amendments or mistaken amendments.

In a first aspect, a method for amending prompt is provided, and the method comprises:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

Furthermore, the method further comprises:
combining a historical amending track with the current amending operation to update the relevance model.

Furthermore, the step of combining a historical amending track with the current amending operation to update the relevance model comprises:
determining whether the user continuously amends attribute information of other products within a predetermined time before the current amending operation;
if the user continuously amends attribute information of other products, determining that the specified product is relevant to other products, and adding a product relevance relation between the specified product and other products into the relevance model.

Furthermore, the step of combining a historical amending track with the current amending operation to update the relevance model comprises:
counting amended attribute information of the specified product in the current amending operation; and
when there are various kinds of attribute information, adding an attribute relevance relation between the various kinds of attribute information for the specified product in the relevance model.

Furthermore, after outputting the prompt information, the method further comprises:
when an operation that prompting information is ignored is detected, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

In a second aspect, a device for amending prompt is provided, and the device comprises:
an obtaining module configured for obtaining attribute information of a current amendment when an operation that a specified product is amended is detected;
an inquiring module configured for inquiring a relevance model according to the specified product and the attribute information, so as to obtain relevant products of the specified product and relevant attribute information of the attribute information; and
a prompt module configured for outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

Furthermore, the device further comprises:
an updating module configured for combining a historical amending track with the current amending operation to update the relevance model.

Furthermore, the updating module comprises:
a determining unit configured for determining whether the user continuously amends attribute information of other products within a predetermined time before the current amending operation; and
a first adding unit configured for determining that the specified product is relevant to other products when the determining result of the determining unit is that the user continuously amends attribute information of other products, and adding a product relevance relation between the specified product and other products into the relevance model.

Furthermore, the updating module comprises:
a counting unit configured for counting amended attribute information of the specified product in the current amending operation; and
a second adding unit configured for adding an attribute relevance relation between various kinds of attribute information for the specified product in the relevance model when there are various kinds of attribute information.

Furthermore, the device further comprises:
a deleting module configured for: after outputting the prompt information, when an operation that prompting information is ignored is detected, updating the number of times when ignoring the operation of prompting information continuously; determining whether the number of times of continuously ignoring is larger than or equal to a predetermined threshold value of the number of times; if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

In a third aspect, a terminal is provided, and the terminal comprises a processor, a storage medium, an input apparatus, and an output apparatus; wherein
the input apparatus is configured to receive an amending operation of a user to a specified product;
the storage medium is configured to store program codes;
the processor is configured to execute the program codes stored by the storage medium and thereby execute the following operations:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product;
the output apparatus is configured to output the prompt information.

In a fourth aspect, a non-transient computer-readable storage medium is provided; the non-transient computer-readable storage medium stores at least one instruction executable by one or more processor(s) to execute operations, and the operations comprise:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

Compared with the prior art, embodiments of the present application obtain attribute information of a current amendment when detecting an amending operation of a user for a specified product, inquire a relevance model according to the specified product and the attribute information so as to obtain relevant products of the specified product and relevant attribute information of the attribute information, and output prompt information so as to prompt the user whether to execute a synchronous amendment to the relevant products and the relevant attribute information. In this way, it is realized that users are intelligently prompted and led to amend, such that the users can obtain relevant products or attribute information during an amending process of an insurance product, amending operations of the users are effectively facilitated, the amending efficiency is improved, and it is convenient to reduce the probability of missed amendments or mistaken amendments of insurance products.

### BRIEF DESCRIPTION OF THE DRAWINGS

In order to illustrate technical solutions in embodiments of the present application or in the prior art more clearly, drawings required being used in description of the embodiments or of the prior art will be briefly introduced below. Obviously, the drawings in the below description are merely some embodiments of the present application, and for those ordinary skilled in the art, other drawings can be obtained according to these drawings without creative work.
FIG. 1 is an implementing flow chart of a method for amending prompt provided by a first embodiment of the present application;
FIG. 2 is an implementing flow chart of a method for amending prompt provided by a second embodiment of the present application;
FIG. 3 is a specific implementing flow chart of the step S104 of the method for amending prompt provided by a second embodiment of the present application;
FIG. 4 is another specific implementing flow chart of the step S104 of the method for amending prompt provided by a second embodiment of the present application;
FIG. 5 is an implementing flow chart of a method for amending prompt provided by a third embodiment of the present application;
FIG. 6 is a formation structural diagram of a device for amending prompt provided by a fourth embodiment of the present application;
FIG. 7 is a schematic block diagram of a terminal provided by a fifth embodiment of the present application.

### DETAILED DESCRIPTION OF THE PREFERRED EMBODIMENT

In order to make the purposes, the technical solutions and the advantages of the present application be clearer and more understandable, the present application will be further described in detail below with reference to accompanying figures and embodiments. It should be understood that the specific embodiments described herein are merely intended to illustrate but not to limit the present application.

The embodiments of the present application obtain attribute information of a current amendment when detecting an amending operation of a user for a specified product, inquire a relevance model according to the specified product and the attribute information so as to obtain relevant products of the specified product and relevant attribute information of the attribute information, and output prompt information so as to prompt the user whether to execute a synchronous amendment to the relevant products and the relevant attribute information. In this way, it is realized that users are intelligently prompted and led to amend, such that the users can obtain relevant products or attribute information during an amending process of an insurance product, amending operations of the users are effectively facilitated, the amending efficiency is improved, and it is convenient to reduce the probability of missed amendments or mistaken amendments of insurance products. The embodiments of the present application further provide a corresponding device for amending prompt, and detailed explanations are respectively described below.

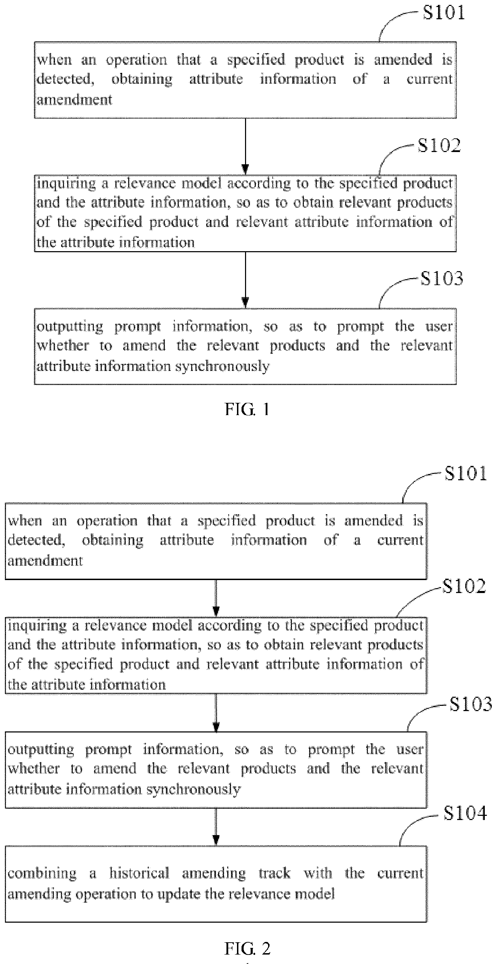

FIG. 1 is an implementing flow chart of a method for amending prompt provided by a first embodiment of the present application.

In this embodiment of the present application, the method for amending prompt is applied in terminal apparatuses, wherein the terminal apparatuses comprise but are not limited to computers, mobile terminals (such as smart phones and tablet PCs), and so on. Referring to FIG. 1, the method for amending prompt comprises:
In a step S101, when an operation that a specified product is amended is detected, obtaining attribute information of a current amendment.

Exemplarily, in this embodiment of the present application, the specified product is an insurance product of an insurance company. The insurance product comprises various kinds of attribute information, such as policy holder information and insured item information; the policy holder information comprises but is not limited to the name, age, gender, and so on, and the insured item information comprises but is not limited to the insurance code, maximum insured age, minimum insured age, benefiting manner, benefiting age, and so on.

In this embodiment of the present application, when a user performs an amending operation for a specified product in a system of an insurance company, a terminal apparatus obtains the specified product and attribute information of a current amendment in real time.

In a step S102, inquiring a relevance model according to the specified product and the attribute information, so as to obtain relevant products of the specified product and relevant attribute information of the attribute information.

In one embodiment of the present application, a relevance model is predetermined, and the relevance model stores much relevance information, which comprises product relevance relations and attribute relevance relations. At first, the relevance information in the relevance model is manually organized and input by IT employees and salesmen. For example, a product with an insurance code P0001 (for convenient description, hereinafter referred to as "the P0001 product") is relevant to a product with an insurance code P0002 (for convenient description, hereinafter referred to as "the P0002 product"), a corresponding product relevance relation is recorded in the relevance model; the P0001 product is a relevant product of the P0002 product, and correspondingly, the P0002 product is also a relevant product of the P0001 product. The attribute relevance relation is a relevance relation between different attribute information of the same product, and each product corresponds to a group of attribute relevance relations. For example, two kinds of attribute information, such as the minimum insured age and the maximum insured age, of the product with the insurance code P0001 are relevant, and thus a corresponding attribute relevance relation is recorded in the relevance model; the minimum insured age is relevant attribute information of the maximum insured age, and correspondingly, the maximum insured age is also relevant attribute information of the minimum insured age.

After obtaining the specified product amended by the user and the attribute information of the current amendment, by inquiring the relevance model, the relevant product which is relevant to the specified product is obtained, and the relevant attribute information which is relevant to the attribute information of the current amendment is acquired. In this embodiment, the relevant product which is relevant to the specified product can be acquired by inquiring the product relevance relation, and/or the relevant attribute information which is relevant to the attribute information of the current amendment can be acquired by inquiring the attribute relevance relation. As mentioned in the aforesaid examples, if the user amends the P0001 product, by inquiring the product relevance relation in the relevance model, it is found that the relevant product which is relevant to the P0001 product is the P0002 product. If the user amends the minimum insured age of the P0001 product, by inquiring the attribute relevance relation in the relevance model, it is found that the relevant attribute information in the P0001 product which is relevant to the minimum insured age is the maximum insured age.

In a step S103, outputting prompt information, so as to prompt the user whether to amend the relevant products and the relevant attribute information synchronously.

When acquiring the relevant product of the specified product, and/or acquiring relevant attribute information of the attribute information of the current amendment, prompt information is output so as to prompt the user whether to execute a synchronous amendment to the relevant product and/or the relevant attribute information. In this embodiment, the prompt is preferably a text or image prompt, for example, the user can be prompted by warning characters in a preset format displayed on a display of the terminal apparatus.

As mentioned in the aforesaid examples, if the user amends the P0001 product, and by inquiring the relevance model, it is found that the relevant product which is relevant to the P0001 product is the P0002 product, prompt information "The product with the insurance code P0001 has relevance with the product with the insurance code P0002, do you need to synchronously amend the attribute information of the P0002 product?" is output. If the user amends the minimum insured age of the P0001 product, and by inquiring the relevance model, it is found that the relevant attribute information of the P0001 product which is relevant to the minimum insured age is the maximum insured age, prompt information "The maximum insured age of the product with the insurance code P0001 has relevance with the minimum insured age thereof, do you synchronously amend the maximum insured age?" is output. In this way, the user is enabled to obtain the relevant product or attribute information during the process of amending the product, and synchronously amend the relevant product or attribute information; it is realized that users are intelligently prompted and led to amend, amending operations of the users are effectively facilitated, the amending efficiency is improved, and it is convenient to reduce the probability of missed amendments or mistaken amendments of insurance products.

Furthermore, based on the method for amending prompt provided by the aforesaid first embodiment of the present application, a second embodiment of the present application is provided.

As shown in FIG. 2, which is an implementing flow chart of a method for amending prompt of the second embodiment of the present application. In this embodiment of the present application, the method for amending prompt can further comprise:
In a step S104, combining a historical amending track with the current amending operation to update the relevance model.

Here, this embodiment of the present application dynamically updates the relevance model by combining a previous amending track with the current amending operation, so as to ensure effectiveness of the product relevance relation and the attribute relevance relation in the relevance model.

Wherein, the historical amending track comprise time of previous amending operations, amended products, and amended attribute information. The contents of updating comprise adding product relevance relations between relevant products, and adding attribute relevance relations between relevant attribute information for a certain product.

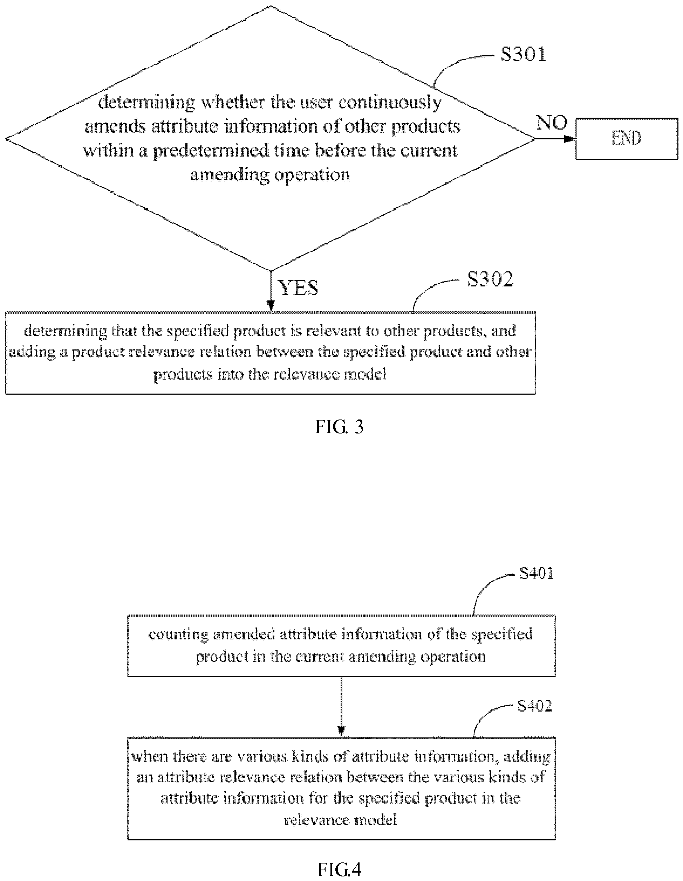

As a preferred embodiment of the present application, FIG. 3 illustrates a specific implementing flow chart of a step S104 of a method for amending prompt provided by one embodiment of the present application. Referring to FIG. 3, the step S104 can comprise:
In a step S301, determining whether the user continuously amends attribute information of other products within a predetermined time before the current amending operation.

If the user continuously amends attribute information of other products, executing a step S302; if the user does not continuously amend attribute information of other products, ending the current updating.

In the step S302, determining that the specified product is relevant to other products, and adding a product relevance relation between the specified product and other products into the relevance model.

Here, the predetermined time range can be a time range of the last two days relative to the current amending operation. Exemplarily, as mentioned in the aforesaid examples, if the user amends attribute information A of the P0001 product in this operation, and within a time range of the last two days relative to the current amending operation, according to the previous amending track, it is found that attribute information A of a P0003 product (i.e., a product with an insurance code P0003) is also amended, that is, the user continuously amends the attribute information A of the P0001 product and of the P0003 product within two days, it is determined that the P0001 product is relevant to the P0003 product, and the P0001 product, the P0003 product, and the product relevance relation therebetween are added into the relevance model.

As a preferred example of the present application, FIG. 4 illustrates another implementing flow chart of the step S104 of the method for amending prompt provided by the embodiment of the present application. Referring to FIG. 4, the step S104 can comprise:
In a step S401, counting amended attribute information of the specified product in the current amending operation; and
In a step S402, when there are various kinds of attribute information, adding an attribute relevance relation between the various kinds of attribute information for the specified product in the relevance model.

Exemplarily, as mentioned in the aforesaid examples, if the user amends the P0001 product in this operation, and also amends various kinds of attribute information of the P0001 product, for example, two kinds of attribute information: benefiting manner and benefiting age, through the counting in the step S401, it will be found that various kinds of attribute information of the specified product, which comprises the benefiting manner and the benefiting age, is amended in the current amending operation, and thus it is determined that the two kinds of attribute information of the P0001 product: the benefiting manner and the benefiting age are relevant to each other; in the relevance model, an attribute relevance relation between the benefiting manner and the benefiting age is added for the P0001 product, that is, the two kinds of attribute information of the P0001 product: the benefiting manner and the benefiting age are relevant to each other.

Through the aforementioned steps S301-S302 and steps S401-S402, a dynamical updating for the relevance model is achieved, so as to automatically identify and add useful relevance relations in the relevance model; effectiveness and accuracy of the product relevance relations and the attribute relevance relations in the relevance model are ensured, and it is convenient to reduce the probability of missed amendments or mistaken amendments of the products.

Furthermore, based on the method for amending prompt provided by the aforesaid first embodiment of the present application, a third embodiment of the present application is provided.

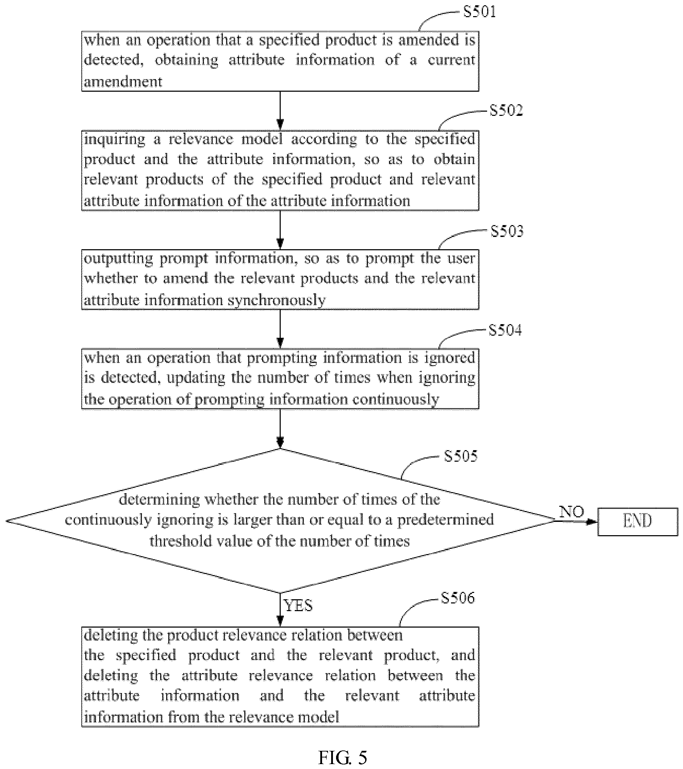

As shown in FIG. 5, which is an implementing flow chart of a method for amending prompt provided by a third embodiment of the present application. In this embodiment of the present application, the method for amending prompt can further comprise:
Step S501-step S503, wherein, the step S501-the step S503 are similar to the step S101-the step S103 of the embodiment of FIG. 1, referring to the description of the aforesaid embodiment, and are not repeated here. Furthermore, the method for amending prompt further comprises:
In a step S504, when an operation that prompting information is ignored is detected, updating the number of times when ignoring the operation of prompting information continuously;
In a step S505, determining whether the number of times of the continuously ignoring is larger than or equal to a predetermined threshold value of the number of times;

If the number of times of the continuously ignoring is larger than or equal to a predetermined threshold value of the number of times, executing a step S506. If the number of times of the continuously ignoring is less than a predetermined threshold value of the number of times, ending.

In the step S506, deleting the product relevance relation between the specified product and the relevant product, and deleting the attribute relevance relation between the attribute information and the relevant attribute information from the relevance model.

Here, with respect to the prompt information output by the terminal apparatus, when the prompt information is useful, the user can make a choice to response the prompt information, and the terminal apparatus will return to an amending interface so as to allow the user to amend again; when the prompt information is of no use, the user can also make a choice to ignore the prompt information. This embodiment of the present application predetermines a threshold value of the number of times, and by counting the number of times of continuously ignoring for the prompt information, compares the number of times of continuously ignoring with the threshold value of the number of times, so as to further organize the product relevance relations and the attribute relevance relations in the relevance model, and thereby delete useless relevance relations in the relevance model. Thus, effectiveness and accuracy of the product relevance relations and the attribute relevance relations in the relevance model are ensured, and it is convenient to reduce the probability of missed amendments or mistaken amendments of the products.

In conclusion, embodiments of the present application obtain attribute information of a current amendment when detecting an amending operation of a user for a specified product, inquire a relevance model according to the specified product and the attribute information so as to obtain relevant products of the specified product and relevant attribute information of the attribute information, and output prompt information so as to prompt the user whether to execute a synchronous amendment to the relevant products and the relevant attribute information. In this way, it is realized that users are intelligently prompted and led to amend, such that the users can obtain relevant products or attribute information during an amending process of an insurance product, amending operations of the users are effectively facilitated, the amending efficiency is improved, and it is convenient to reduce the probability of missed amendments or mistaken amendments of insurance products.

It should be understood that the numerical values of the serial numbers of the steps do not mean their execution sequences in the aforesaid embodiments. The execution sequences of the steps should be determined according to their functions and inherent logistic, and should not form any limitation to the implementation processes of the embodiments of the present application.

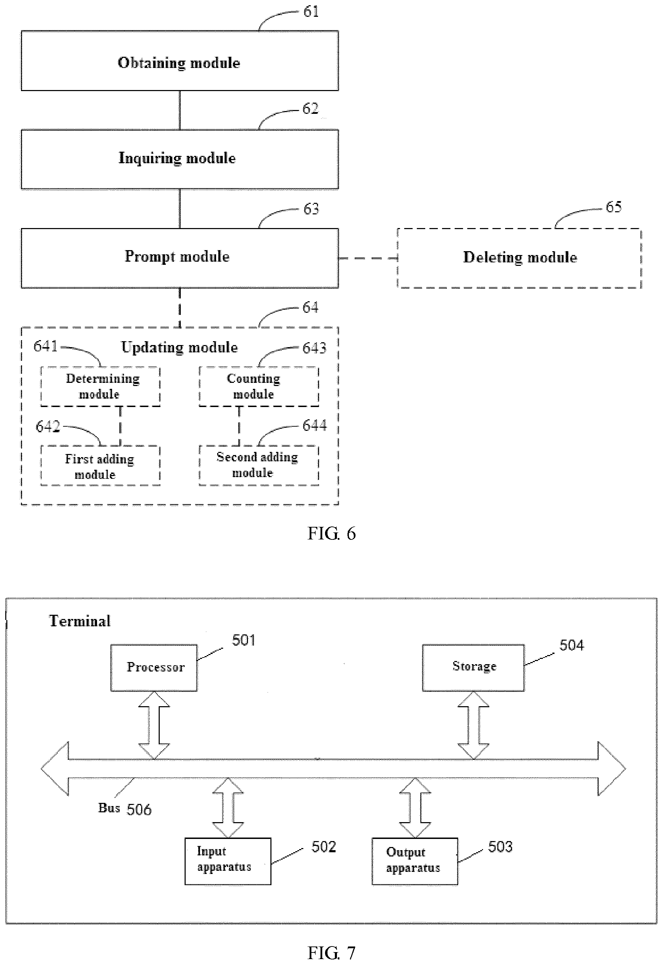

FIG. 6 illustrates a formation structural diagram of a device for amending prompt provided by a fourth embodiment of the present application. In order to facilitate the description, only the parts relevant to this embodiment of the present embodiment are shown.

In this embodiment of the present application, the device for amending prompt is used to implement the method for amending prompt of any one of the embodiments of FIG. 1-FIG. 5, and can be a software unit, a hardware unit, or a unit combining software with hardware built in a terminal apparatus. The terminal apparatus comprises, but is not limited to, a computer, a server, etc.

Referring to FIG. 6, the device for amending prompt comprises:
an obtaining module 61 configured for obtaining attribute information of a current amendment when an operation that a specified product is amended is detected;
an inquiring module 62 configured for inquiring a relevance model according to the specified product and the attribute information, so as to obtain relevant products of the specified product and relevant attribute information of the attribute information; and
a prompt module 63 configured for outputting prompt information, so as to prompt the user whether to amend the relevant products and the relevant attribute information synchronously.

Furthermore, the relevance model comprises a product relevance relation and an attribute relevance relation, the product relevance relation is a relevance relation between different products, and the attribute relevance relation is a relevance relation between different attribute information of the same product.

Furthermore, the device further comprises:
an updating module 64 configured for combining a historical amending track with the current amending operation to update the relevance model.

As one preferred example of the present application, the updating module 64 comprises:
a determining unit 641 configured for determining whether the user continuously amends attribute information of other products within a predetermined time before the current amending operation; and
a first adding unit 642 configured for determining that the specified product is relevant to other products when the determining result of the determining unit is that the user continuously amends attribute information of other products, and adding a product relevance relation between the specified product and other products into the relevance model.

As another preferred example of the present application, the updating module 64 comprises:
a counting unit 643 configured for counting various kinds of amended attribute information of the specified product in the current amending operation; and
a second adding unit 644 configured for adding an attribute relevance relation between the various kinds of attribute information for the specified product in the relevance model.

By the determining unit 641, the first adding unit 642, the counting unit 643, and the second adding unit 644, a dynamical updating for the relevance model is achieved, and useful relevance relations are added into the relevance model; effectiveness and accuracy of the product relevance relations and the attribute relevance relations in the relevance model are ensured, and it is convenient to reduce the probability of missed amendments or mistaken amendments of the products.

Furthermore, the device further comprises:
a deleting module 65 configured for: when an operation that prompting information is ignored is detected, updating the number of times when ignoring the operation of prompting information continuously; determining whether the number of times of continuously ignoring is larger than or equal to a predetermined threshold value of the number of times; if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

Here, with respect to the prompt information output by the terminal apparatus, when the prompt information is useful, the user can make a choice to response the prompt information, and the terminal apparatus will return to an amending interface so as to allow the user to amend again; when the prompt information is of no use, the user can also make a choice to ignore the prompt information. This embodiment of the present application predetermines a threshold value of the number of times, and uses the deleting module 65 to count the number of times of continuously ignoring for the prompt information, compares the number of times of continuously ignoring with the threshold value of the number of times, so as to further organize the product relevance relations and the attribute relevance relations in the relevance model, and thereby delete useless relevance relations in the relevance model. Thus, effectiveness and accuracy of the product relevance relations and the attribute relevance relations in the relevance model are ensured, and it is convenient to reduce the probability of missed amendments or mistaken amendments of the products.

It should be noted that the device of this embodiment of the present application can be used to implement all technical solutions of the aforesaid method embodiments, and the functions of its functional modules can be realized according to the methods of the aforesaid method embodiments, and their specific realization processes can refer to relevant descriptions in the aforesaid embodiments and are not repeated here.

In order to facilitate better implementation of the aforesaid method embodiments of the embodiments of the present application, the present application further provides a relevant terminal configured to cooperatively implement the execution of the aforesaid method embodiments. FIG. 7 illustrates a schematic block diagram of a terminal provided by a fifth embodiment of the present application. The terminal as shown in FIG. 7 can comprise: one or more processor(s) 501 (only one is shown in the figure), one or more input apparatus(es) 502 (only one is shown in the figure), one or more output apparatus(es) 503 (only one is shown in the figure), and a storage medium 504. The processor(s) 501, the input apparatus(es) 502, the output apparatus(es) 503, and the storage medium 504 are connected via a bus 506. The output apparatus (es) 502 is/are used to receive amending operations of users for specified products, the storage medium 504 is used to store program codes, and the processor(s) 501 is/are used to execute the program codes stored in the storage medium 501 and thereby perform the following steps:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

The output apparatus(es) 503 is/are used to output the prompt information.

Optionally, the processor(s) 501 is/are further used to perform:
combining a historical amending track with the current amending operation to update the relevance model.

Optionally, combining a historical amending track with the current amending operation to update the relevance model by the processor(s) 501 comprises:
determining whether the user continuously amends attribute information of other products within a predetermined time before the current amending operation;
if the user continuously amends attribute information of other products, determining that the specified product is relevant to other products, and adding a product relevance relation between the specified product and other products into the relevance model.

Optionally, combining a historical amending track with the current amending operation to update the relevance model by the processor(s) 501 comprises:
counting amended attribute information of the specified product in the current amending operation; and
when there are various kinds of attribute information, adding an attribute relevance relation between the various kinds of attribute information for the specified product in the relevance model.

Optionally, after generating the prompt information, the processor(s) 501 is/are further used to perform:
when the input apparatus(es) 502 detect(s) an operation that prompting information is ignored, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

It should be understood that, in this embodiment of the present application, the processor(s) 501 can be a central processing unit (CPU) and/or a graphic processing unit (GPU), and on this basis, can also be combined with other general processors, digital signal processors (DSP), application specific integrated circuit (ASIC), field-programmable gate array (FPGA), or other programmable logic devices, discrete gate or transistor logic device, discrete hardware components, etc.

The input apparatus(es) 502 can comprise a touch panel, a fingerprint acquisition sensor (configured to acquire fingerprint information of users and direction information of fingerprints), a microphone, a communication module (for example, a Wi-Fi module or a 2G/3G/4G network module), a physical button, etc.

The output apparatus(es) 503 can comprise a display (such as an LCD), a speaker, etc. Wherein, the display can be used to display information input by users or information provided to users. The display can comprise a display panel, and optionally, can adopt a liquid crystal display (LCD), an organic light-emitting diode (LED) or other manners to configure the display panel. Furthermore, the touch panel can cover on the display; when the touch panel detects a touch operation on or near it, the touch operation is transmitted to the processor 501 to determine the type of the touch event; afterwards, the processor 501 provides an corresponding visual output on the display according to the type of the touch event.

In specific implementations, the processor(s) 501, the input apparatus(es) 502, the output apparatus(es) 503, and the storage medium 504 described in this embodiment of the present application can perform the implementing manners described in the embodiments of the method for amending prompt provided by the embodiments of the present application, and are not repeated here.

The present application further provides a non-transient computer-readable storage medium, the non-transient computer-readable storage medium stores at least one instruction executable by one or more processor(s) to execute operations, and the operations comprise:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

Optionally, the operations further comprise:
combining a historical amending track with the current amending operation to update the relevance model.

Optionally, the operation of combining a historical amending track with the current amending operation to update the relevance model comprises:
determining whether the user continuously amends attribute information of other products within a predetermined time before the current amending operation;
if the user continuously amends attribute information of other products, determining that the specified product is relevant to other products, and adding a product relevance relation between the specified product and the another product into the relevance model.

Optionally, the operation of combining a historical amending track with the current amending operation to update the relevance model comprises:
counting amended attribute information of the specified product in the current amending operation; and
when there are various kinds of attribute information, adding an attribute relevance relation between the various kinds of attribute information for the specified product in the relevance model.

Optionally, after outputting the prompt information, the operations further comprises:
when an operation that prompting information is ignored is detected, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

In conclusion, embodiments of the present application obtain attribute information of a current amendment when detecting an amending operation of a user for a specified product, inquire a relevance model according to the specified product and the attribute information so as to obtain relevant products of the specified product and relevant attribute information of the attribute information, and output prompt information so as to prompt the user whether to execute a synchronous amendment to the relevant products and the relevant attribute information. In this way, it is realized that users are intelligently prompted and led to amend, such that the users can obtain relevant products or attribute information during an amending process of an insurance product, amending operations of the users are effectively facilitated, the amending efficiency is improved, and it is convenient to reduce the probability of missed amendments or mistaken amendments of insurance products.

One of ordinary skill in the art can realize that each of the units and algorithm steps in each of the examples described with reference to the embodiments disclosed in the present application can be realized by electronic hardware, or by a combination of computer software and electronic hardware. Whether these functions are performed by means of hardware or software depends on a specific application of a technical solution and design restriction conditions. With respect to each of the specific applications, those skilled in the art can use different methods to realize the described functions, but this realization should not be regarded as going beyond the protection scope of the present application.

One of ordinary skill in the art of this field can clearly understand that: for a convenient and brief description, the specific working processes of the aforementioned devices and units can refer to the corresponding processes of the aforesaid method embodiments, and are not repeated here.

In the embodiments provided by the present application, it should be understood that the disclosed method, device, terminal, and storage medium can be achieved in other ways. For example, the aforementioned device embodiments are schematic merely, for example, the division of the modules and units is only a kind of logic function division, and there can be other division manners in actual implementations, for example, a plurality of units or components can be combined or integrated into another system, or some features can be ignored or unexecuted. Additionally, the displayed or discussed mutual coupling, direct coupling, or communication connections can be indirect coupling or communication connections via some interfaces, devices or units, and can be of electrical, mechanical, or other types.

The units illustrated as separate components can be, but can also not be, physically separated, and components displayed as units can be, but can also not be, physical units; that is, these components can be located at the same place, but can also be distributed into a plurality of network units. According to actual requirements, some or all of the units can be selected to achieve the purposes of the solutions in these embodiments.

In addition, each of the functional units and modules in each of the embodiments of the present application can be integrated into one processing unit, each of the functional units and modules can also be an independent physical presence, and two or more than two functional units and modules can also be integrated into one unit.

When a function is realized in the form of software functional units, and is sold or used as an independent product, it can be stored in a computer readable storage medium. Based on this understanding, the essential technical solution of the present application, in other words, the part making a contribution to the prior art, or some parts of the technical solution can be embodied in the form of a software product, the computer software product is stored in a storage medium and comprises instruction configured to enable a computer apparatus (which can be a personal computer, a server, or a network apparatus, etc.) to execute all or some of the steps of the method of each embodiment of the present application. The aforementioned storage medium comprises various media that can store program codes, such as a USB (Universal Serial Bus) flash disk, a mobile hard disk drive, a Read only Memory (ROM), a Random Access Memory (RAM), a magnetic disk, a compact disc, etc.

The embodiments described above are merely specific embodiments of the present application, but the protection scope of the present application is not limited to these embodiments. In the technical range disclosed by the present application, any change or replacement that can be easily thought out by any one of ordinary skill in the art should be comprised in the protection scope of the present application. Therefore, the protection scope of the present application should refer to the protection scope of the claims.

## Claims

1. A method for amending prompt, wherein, the method comprises:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

2. The method for amending prompt according to claim 1, wherein, the method further comprises:
combining a historical amending track with the current amending operation to update the relevance model.

3. The method for amending prompt according to claim 2, wherein, the step of combining a historical amending track with the current amending operation to update the relevance model comprises:
determining whether the user continuously amends attribute information of other products within a predetermined time before the current amending operation;
if the user continuously amends attribute information of other products, determining that the specified product is relevant to other products, and adding a product relevance relation between the specified product and other products into the relevance model.

4. The method for amending prompt according to claim 2, wherein, the step of combining a historical amending track with the current amending operation to update the relevance model comprises:
counting amended attribute information of the specified product in the current amending operation; and
when there are various kinds of attribute information, adding an attribute relevance relation between the various kinds of attribute information for the specified product in the relevance model.

5. The method for amending prompt according to any one of claims 1-4, wherein, after outputting the prompt information, the method further comprises:
when an operation that prompting information is ignored is detected, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

6. A device for amending prompt, wherein, the device comprises:
an obtaining module configured for obtaining attribute information of a current amendment when an operation that a specified product is amended is detected;
an inquiring module configured for inquiring a relevance model according to the specified product and the attribute information, so as to obtain relevant products of the specified product and relevant attribute information of the attribute information; and
a prompt module configured for outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

7. The device for amending prompt according to claim 6, wherein, the device further comprises:
an updating module configured for combining a historical amending track with the current amending operation to update the relevance model.

8. The device for amending prompt according to claim 7, wherein, the updating module comprises:
a determining unit configured for determining whether the user continuously amends attribute information of other products within a predetermined time before the current amending operation; and
a first adding unit configured for determining that the specified product is relevant to other products when the determining result of the determining unit is that the user continuously amends attribute information of other products, and adding a product relevance relation between the specified product and other products into the relevance model.

9. The device for amending prompt according to claim 7, wherein, the updating module comprises:
a counting unit configured for counting amended attribute information of the specified product in the current amending operation; and
a second adding unit configured for adding an attribute relevance relation between various kinds of attribute information for the specified product in the relevance model when there are various kinds of attribute information.

10. The device for amending prompt according to any one of claims 6-9, wherein, the device further comprises:
a deleting module configured for: after outputting the prompt information, when an operation that prompting information is ignored is detected, updating the number of times when ignoring the operation of prompting information continuously; determining whether the number of times of continuously ignoring is larger than or equal to a predetermined threshold value of the number of times; if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

11. A terminal, wherein, the terminal comprises a processor, a storage medium, an input apparatus, and an output apparatus;
the input apparatus is configured to receive an amending operation of a user to a specified product;
the storage medium is configured to store program codes;
the processor is configured to execute the program codes stored by the storage medium and thereby execute the following operations:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product;
the output apparatus is configured to output the prompt information.

12. The terminal according to claim 11, wherein, the processor is further configured to execute:
combining a historical amending track with the current amending operation to update the relevance model.

13. The terminal according to claim 12, wherein, the operation of combining a historical amending track with the current amending operation to update the relevance model comprises:
determining whether the user continuously amends attribute information of other products within a predetermined time before the current amending operation;
if the user continuously amends attribute information of other products, determining that the specified product is relevant to other products, and adding a product relevance relation between the specified product and other products into the relevance model.

14. The terminal according to claim 12, wherein, the operation of combining a historical amending track with the current amending operation to update the relevance model comprises:
counting amended attribute information of the specified product in the current amending operation; and
when there are various kinds of attribute information, adding an attribute relevance relation between the various kinds of attribute information for the specified product in the relevance model.

15. The terminal according to any one of claims 11-14, wherein, after generating the prompt information, the processor is further configured to perform:
when an operation that prompting information is ignored is detected, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.

16. A non-transient computer-readable storage medium, wherein, the non-transient computer-readable storage medium stores at least one instruction executable by one or more processor(s) to execute operations, and the operations comprise:
when an operation that a specified product is amended is detected, obtaining attribute information of a current amendment;
inquiring a relevance model according to the specified product and the attribute information, so as to obtain relevant products of the specified product and relevant attribute information of the attribute information; and
outputting prompt information, so as to prompt the user whether to amend the relevant products and the relevant attribute information synchronously;
wherein, the relevance model comprises a product relevance relation and an attribute relevance relation, the product relevance relation is a relevance relation between different products, and the attribute relevance relation is a relevance relation between different attribute information of the same product.

17. The medium according to claim 16, wherein, the operations further comprises:
combining a historical amending track with the current amending operation to update the relevance model.

18. The medium according to claim 17, wherein, the operation of combining a historical amending track with the current amending operation to update the relevance model comprises:
determining whether the user continuously amends attribute information of other products within a predetermined time before the current amending operation;
if the user continuously amends attribute information of other products, determining that the specified product is relevant to other products, and adding a product relevance relation between the specified product and other products into the relevance model.

19. The medium according to claim 17, wherein, the operation of combining a historical amending track with the current amending operation to update the relevance model comprises:
counting amended attribute information of the specified product in the current amending operation; and
when there are various kinds of attribute information, adding an attribute relevance relation between the various kinds of attribute information for the specified product in the relevance model.

20. The medium according to any one of claims 16-19, wherein, after generating the prompt information, the operations further comprise:
when an operation that prompting information is ignored is detected, updating the number of times when ignoring the operation of prompting information continuously;
determining whether the number of times of continuously ignoring is larger than or equal to a predetermined threshold value of the number of times;
if the number of times of ignoring the operation of prompting information continuously is greater than or equal to a predetermined threshold value of the number of times, deleting the product relevance relation between the specified product and the relevant product, and deleting the attribute relevance relation between the attribute information and the relevant attribute information from the relevance model.
